Europäisches Patentamt

European Patent Office

Office européen des brevets

(19)

(11) Publication number: **0 359 471**

**A2**

(12) # EUROPEAN PATENT APPLICATION

(21) Application number: **89309058.9**

(51) Int. Cl.⁵: **G06F 11/14**

(22) Date of filing: **07.09.89**

(30) Priority: **13.09.88 US 243851**

(43) Date of publication of application:
**21.03.90 Bulletin 90/12**

(84) Designated Contracting States:
**DE FR GB IT NL**

(71) Applicant: **Compaq Computer Corporation**
**20555 S.H. 249**
**Houston Texas 77070(US)**

(72) Inventor: **Elliott, Charles B., Jr.**
**4322 Autumn Meadow Drive**
**Katy Texas 77449(US)**

(74) Representative: **Brunner, Michael John et al**
**GILL JENNINGS & EVERY 53-64 Chancery**
**Lane**
**London WC2A 1HN(GB)**

(54) **Hot backup file-server system.**

(57) A computer system includes a main file server
(20) and a backup file server (25). An overseer unit
(30) within the system periodically causes the backup file server to be updated by copying new and
therefore unbacked-up records from the main file
server to the backup file server. If the main file
server becomes unusable, e.g. because of a crash,
the control unit diverts user logon requests to the
backup file server.

*Fig.1*

EP 0 359 471 A2

## HOT BACKUP FILE-SERVER SYSTEM

This invention pertains to apparatus for maintaining a contemporaneous or "hot" backup of a network file-server system, and a method for operating the apparatus.

Computer disk systems sometimes fail or "crash." When they do, information stored on the disk may be lost. Even when tape backups are periodically made, information can still be lost if the system fails in between backup operations.

According to the invention a computer system includes a main file server and a backup file server. An overseer unit within the system periodically causes the backup file server to be updated by selectively copying main file server records to the backup file server.

If the main server becomes unusable or inaccessible, e.g., because of a crash, the user's log-on request is diverted to the backup file server.

Figure 1 is a block diagram of the computer system of the present invention;

Figure 2 is a flowchart of a backup procedure; and

Figure 3 is a flowchart of a log on session.

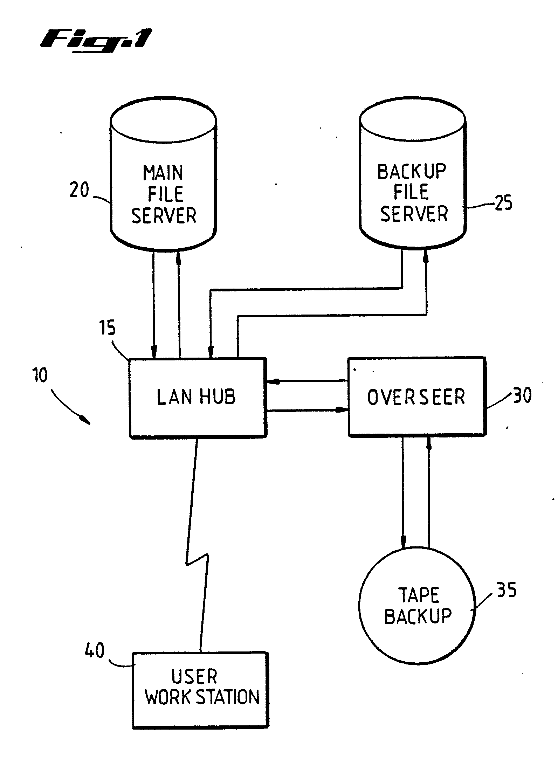

Referring to Figure 1, a illustrative computer system 10 is organized in connection with a hub 15 of a local area network (LAN). A main file server 20 and a backup file server 25 are linked with the hub 15, as is an overseer control unit 30 that is connected to control the two file servers. The overseer 30 is also linked to and can control a tape backup unit 35.

The hub 15 may include a computer executing a LAN control program such as the NetWare software distributed by Novell Corporation of Provo, Utah.

The main file server 20 and backup file server 25 may include desktop computers having hard disk units of sufficient size for mass storage. For example, each could include a Compaq 386 desktop computer with a 130-megabyte hard disk. Alternative storage means could also be equivalently used, e.g., a write-once read-mostly (WORM) disk, in lieu of a hard disk.

The contents of the file servers 20 and 25 may include both data files and program files. For example, in many applications it will be convenient to store a copy of, say, a database analysis program on each of the file servers, so that users who wish to run the program can simply log on to a file server.

The overseer 30 may also be a desktop computer such as a Compaq 386, but normally need not have the same large-capacity disk storage as the file servers 20 and 25. The tape backup 35 may be a unit such as the Filesafe Series 9170 distributed by the Mountain company, which has approximately one hundred and twenty (120) megabytes of storage.

In one embodiment, data is organized on the file servers in various database files, e.g., dBase III files.

For example, the system 10 may be designed to serve as a data gathering system for a hardware testing facility. In such a testing facility, test data is manually input (or equivalently may be automatically input) at one or more user workstations 40 and transmitted on the LAN to the main file server 20 via the hub 15.

All test data from hardware components of a given type are added to a database file for that type on the main file server 20. For example, all test data for 80386 motherboards may be directed to a dBase III file designated here as MAIN:MOTHER. The counterpart file on the backup file server 25 is BACKUP:MOTHER.

The names of all such test data files may be stored in a MAIN:FILENAME file on the main file server (which itself may of course be backed up on the backup file server 25).

The overseer 30 is programmed periodically (e.g., every five minutes) to perform an incremental backup of the main file server 20 by copying unbacked-up portions to the backup file server 25.

In the illustrative embodiment described above, the overseer 30 compares (a) the number of test data records stored in each test data file on the main file server 20 against (b) the number of records stored in the counterpart files on the backup file server 25.

If any file on the main file server 20 contains more data records than the counterpart file on the backup file server 25, the extra records on the main file server 20 are copied and appended to the counterpart file.

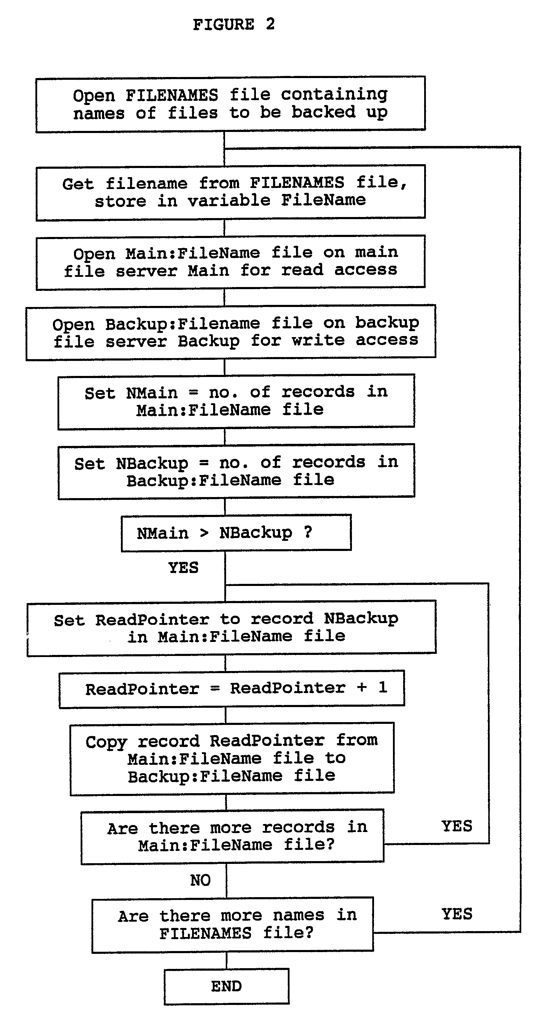

Figure 2 sets forth a flowchart representation of the logical structure of such programming. It will be noted that things such as input and output management, error checking and handling, and other conventional software-engineering functions are not shown.

Other methods of incremental backup may equivalently be used. For example, if the data records stored in the MAIN:MOTHERBOARD file can be edited after being added to the file, appropriate flags can be set to indicate records that have either been added or edited, with those records being the ones backed up to the backup file server 25.

The overseer may also be conventionally programmed to perform a backup to the tape backup 35, for an additional level of redundancy.

The system 10 may be programmed to permit users automatically to log on to the backup file server 25 whenever the main file server 20 is "down" (inoperative or inaccessible). The programming may be local to the overseer 30, or equivalently may reside at the user workstation 35.

For example, the user workstation 35 may be programmed so that a user logs on to the system 10 by executing an MS-DOS .BAT batch file. The batch file may be designed to make one or more attempts to log on to the main file server 2) (a total of six attempts has been found to work satisfactorily) and, if unsuccessful, to attempt instead to log on to the backup file server 25.

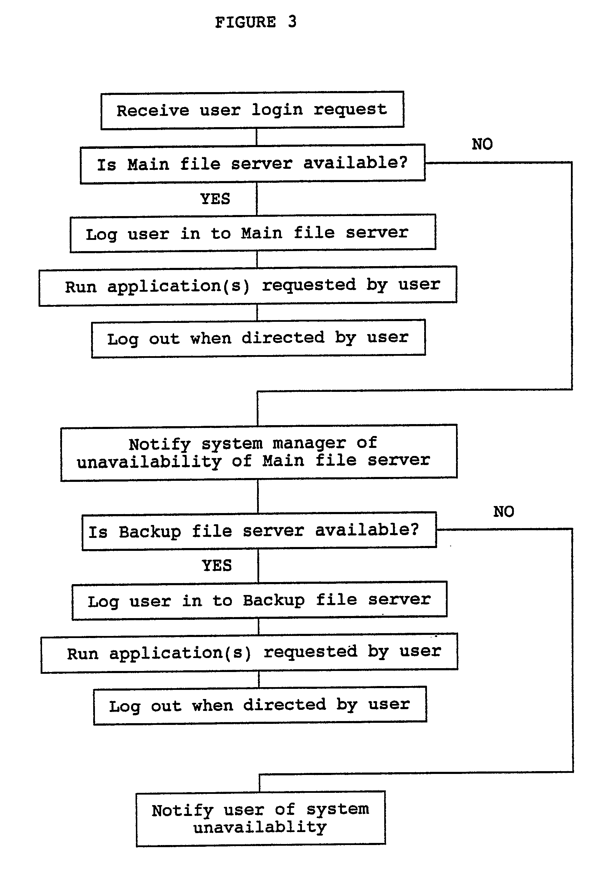

Figure 3 sets forth a flowchart representation of the logical structure of such programming.

## Claims

1. A computer system comprising:

(a) a main file server (20) operable to receive the store data and adapter to be accessed by a computer (40);

(b) a secondary file server (25) operable to receive and store data; and

(c) an overseer unit (30) programmed to compare data stored in the secondary. file serve with data filed in the main file server, to enter into the secondary file server from the main file server data which is not in the secondary file server, and to repeat such comparison and entry at a sufficient rate to keep data in the secondary file server substantially contemporaneous with the data stored in the main file server.

2. A computer system according to claim 1, wherein

the main file server (20) is capable of storing one or more records in each of one or more files;

the secondary file server (25) is capable of storing one or more records in each of one or more files; and

the overseer unit (30) is programmed to perform periodically the steps

(i) counting the N(MAIN) records stored in a MAIN one of the files on the main file server,

(ii) counting the N(BACKUP) records stored in a selected BACKUP one of the files on the secondary file server,

(iii) if N(MAIN) > N(BACKUP), then appending to the BACKUP file a copy of each of the N-(BACKUP) + 1'th through N(MAIN)'th records of the MAIN file.

## Fig.1

## FIGURE 2

```
┌─────────────────────────────────────┐
│ Open FILENAMES file containing       │
│ names of files to be backed up       │
└─────────────────────────────────────┘
                    │
┌─────────────────────────────────────┐
│ Get filename from FILENAMES file,    │
│   store in variable FileName         │
└─────────────────────────────────────┘
                    │
┌─────────────────────────────────────┐
│ Open Main:FileName file on main      │
│ file server Main for read access     │
└─────────────────────────────────────┘
                    │
┌─────────────────────────────────────┐
│ Open Backup:Filename file on backup  │
│ file server Backup for write access  │
└─────────────────────────────────────┘
                    │
┌─────────────────────────────────────┐
│ Set NMain = no. of records in        │
│       Main:FileName file             │
└─────────────────────────────────────┘
                    │
┌─────────────────────────────────────┐
│ Set NBackup = no. of records in      │
│       Backup:FileName file           │
└─────────────────────────────────────┘
                    │
        ┌─────────────────────────┐
        │ NMain > NBackup ?        │
        └─────────────────────────┘
                 YES │
┌─────────────────────────────────────┐
│ Set ReadPointer to record NBackup    │
│       in Main:FileName file          │
└─────────────────────────────────────┘
                    │
        ┌─────────────────────────────┐
        │ ReadPointer = ReadPointer + 1│
        └─────────────────────────────┘
                    │
┌─────────────────────────────────────┐
│ Copy record ReadPointer from         │
│       Main:FileName file to          │
│       Backup:FileName file           │
└─────────────────────────────────────┘
                    │
        ┌─────────────────────────┐
        │ Are there more records in│  YES
        │    Main:FileName file?   │
        └─────────────────────────┘
                 NO │
        ┌─────────────────────────┐
        │ Are there more names in  │  YES
        │    FILENAMES file?       │
        └─────────────────────────┘
                    │
              ┌──────────┐
              │   END    │
              └──────────┘
```

## FIGURE 3

```
┌─────────────────────────────────────┐
│    Receive user login request        │
└─────────────────────────────────────┘
┌─────────────────────────────────────┐         NO
│   Is Main file server available?     │──────────────┐
└─────────────────────────────────────┘              │
              YES                                     │
┌─────────────────────────────────────┐              │
│    Log user in to Main file server   │              │
└─────────────────────────────────────┘              │
┌─────────────────────────────────────┐              │
│ Run application(s) requested by user │              │
└─────────────────────────────────────┘              │
┌─────────────────────────────────────┐              │
│    Log out when directed by user     │              │
└─────────────────────────────────────┘              │
                                                      │
┌─────────────────────────────────────┐              │
│       Notify system manager of       │              │
│  unavailability of Main file server  │              │
└─────────────────────────────────────┘              │
┌─────────────────────────────────────┐         NO
│  Is Backup file server available?    │──────────────┐
└─────────────────────────────────────┘              │
              YES                                     │
┌─────────────────────────────────────┐              │
│   Log user in to Backup file server  │              │
└─────────────────────────────────────┘              │
┌─────────────────────────────────────┐              │
│ Run application(s) requested by user │              │
└─────────────────────────────────────┘              │
┌─────────────────────────────────────┐              │
│    Log out when directed by user     │              │
└─────────────────────────────────────┘              │
                                                      │
┌─────────────────────────────────────┐              │
│        Notify user of system         │              │
│            unavailablity             │              │
└─────────────────────────────────────┘
```